# EUROPÄISCHE PATENTANMELDUNG

(11) **EP 2 319 883 A1**
(43) Veröffentlichungstag der Anmeldung: **11.05.2011**
(21) Anmeldenummer: 11000973.5
(22) Anmeldetag: 15.07.2009
(51) Int. Cl.: C08L 23/06, B29C 49/12, B29C 49/06

(54) **Kunststoffformulierung und Verfahren zur Herstellung von Kunststoffflaschen in einem Zweistufen-Steckblasprozess**

(30) Priorität: 24.07.2008 CH 11612008
(62) Teilanmeldung aus: 09777195.0
(71) Anmelder: Alpla-Werke Alwin Lehner GmbH und Co. KG, 6971 Hard (AT)
(72) Erfinder: Siegl, Robert, 6850 Dornbirn (AT)
(74) Vertreter: Bohest AG Branch Ostschweiz

(57) **Zusammenfassung**

Es ist eine Kunststoffformulierung zur Herstellung von Kunststoffflaschen in einem Zweistufen-Streckblasprozess beschrieben, die wenigstens 60% auf HDPE (High Density Polyethylen) aufweist, welches eine Dichte von 0.941 g/cm³ bis 0.965 g/cm³ besitzt und nach ISO 1133 einen Meltindex 190°C /2.16 kg von 0.1 bis 0.9g/10 min hat, wobei das HDPE ein wenigstens bimodales HDPE mit einem zweiten Meltindex 190°C/21.6 kg von 5 g/10 min bis 50 g/10 min nach ISO 1133 umfasst.
Weiters ist auch ein Verfahren zur Herstellung einer Kunststoffflasche in einem Zweistufen-Streckblasprozess beschrieben, in dem eine erfindungsgemässe Kunststoffformulierung verarbeitet wird.

## Beschreibung

Die Erfindung betrifft eine Kunststoffformulierung zur Herstellung von Kunststoffflaschen in einem Zweistufen-Streckblasprozess gemäss dem Oberbegriff des Patentanspruchs 1. Weiters betrifft die Erfindung auch ein Verfahren zur Herstellung von Kunststoffflaschen in einem Zweistufen-Streckblasprozess.

Ein grosse Zahl der heutzutage eingesetzten Kunststoffflaschen und dergleichen Kunststoffbehälter wird in einem Streckblasprozess hergestellt. Bei diesem Verfahren wird ein sogenannter Preform, der meist eine längliche röhrchenartige Gestalt besitzt, an seinem einen Längsende einen Boden und am anderen Längsende einen Halsbereich mit ausgeformten Gewindeabschnitten oder dergleichen aufweist, in eine Formkavität einer Blasform eingesetzt und durch ein mit Überdruck eingeblasenes Medium aufgeblasen. Dabei wird der Preform zusätzlich mit einem durch die Halsöffnung eingefahrenen Reckdorn in axiale Richtung gereckt. Nach dem Reck-/Blasvorgang wird die fertige Kunststoffflasche aus der Blasform entformt.

Der ein oder mehrschichtige Preform wird vor dem Streckblasprozess in einem separaten Spritzgiess- oder in einem Kunststofffliesspressverfahren hergestellt. Im sogenannten Einstufen-Streckblasprozess wird der Preform unmittelbar nach seiner Herstellung zu einem Kunststoffbehälter aufgeblasen und gereckt. Vielfach werden die Kunststoffbehälter jedoch in einem zweistufigen Verfahren räumlich und zeitlich getrennt vom Streckblasprozess hergestellt und für die spätere Verwendung zwischengelagert. Beim späteren Streckblasprozess werden die Preforms wieder erwärmt, um daraus Kunststoffflaschen herzustellen. Auf diese Weise können beide Prozesse, das Spritzgiessen und das Streckblasen, separat und optimal betrieben werden. Im Streckblasprozess wird der Preform beispielsweise durch Infrarot-Strahlung auf die erforderliche Temperatur gebracht und während des Umformvorgangs mit einer Reckstange in axialer Richtung verstreckt und mittels Überdruck im Formwerkzeug radial ausgeformt.

Als Rohstoff für die Herstellung von Kunststoffflaschen im Streckblasprozess kommt vor allem Polypropylen oder PET (Polyethylenterephthalat) zum Einsatz. Polypropylen und PET sind vielfach erprobt und ihre Eigenschaften sind hinlänglich bekannt. Polypropylen weist wegen seiner niedrigen Steifigkeit jedoch relativ schlechte Top Load Eigenschaften auf. Auch sind die Kriecheigenschaften des orientierten Polypropylen nur mangelhaft. Kunststoffflaschen, die im zweistufigen Verfahren hergestellt werden, generieren wegen des üblicherweise verwendeten PET und wegen ihres breiten Verwendungsgebietes grosse Schwierigkeiten im Recycling Strom. Gerade Kunststoffbehälter, die beispielsweise als Milchflaschen, für die Bereitstellung von Kosmetika oder für die Aufbewahrung von Reinigungsmitteln eingesetzt werden, sollen im Recycling ausgeschieden werden, da sie für den direkten Lebensmittelkontakt unerwünscht sind. Wegen der Dichte von PET sind diese Flaschen aber nicht in einem Schwimm-Sink Verfahren ausscheidbar.

Aus technischen und wirtschaftlichen Gründen wäre es daher wünschenswert, wenn auch weitere, problemspezifisch angepasste Kunststoffe, beispielsweise HDPE (High Density Polyethylen), im Streckblasprozess verarbeitet werden könnten. Dabei besitzt HDPE auch bei geringen Wandstärken eine relativ hohe Steifigkeit.

Im Spritzblasprozeß und im Einstufen-Streckblasprozeß ist der Einsatz des vom Extrusionsblasprozess her bekannten HDPE als Rohstoff für die Herstellung von Kunststoffflaschen bereits gängige Praxis. Im Zweistufen-Streckblasprozeß mit den dort üblichen hohen Reckverhältnissen wird HDPE bis jetzt nicht eingesetzt, da die mangelnde Streckverfestigung des HDPE entweder gar keine Flaschenherstellung ermöglichte oder Kunststoffflaschen mit einem zu stark schwankenden Prozeß oder ungleichmäßigem Wandstärkenprofil zur Folge hatte. Diese Probleme treten grundsätzlich auch beim Spritzblasen und beim Einstufen-Streckblasprozess mit HDPE auf. Man behilft sich jedoch dadurch, dass man die Preforms beim Aufblasen nur sehr wenig expandieren lässt, um die Probleme mit der instabilen Wandstärke zu kaschieren. Die beim Spritzblasen und beim Einstufen-Streckblasprozess eingesetzten Preforms weisen daher bereits eine Länge auf, die sich nur wenig von der Länge der hergestellten Flaschen unterscheidet. Entsprechend beträgt das Längsreckverhältnis nur 1 bis 1.8. Das Durchmesserreckverhältnis beträgt zwischen 1 und höchstens 2.2.

Üblicherweise läßt sich die Materialverteilung beim Streckblasen über die Viskosität des verwendeten Rohmaterials beeinflussen. Doch jene zähflüssigen Rohmaterialien, die sich im Streckblasprozess einfach verarbeiten lassen, haben vielfach eine zu hohe Viskosität für den Spritzgiessprozess. Rohmaterialien, die für den Zweistufen-Streckblasprozess geeignet sein sollen, müssen jedoch die Anforderungen des Spritzgiessprozesses zur Herstellung der Preforms und diejenigen des Streckblasprozesses, in dem aus den Preforms Kunststoffflaschen hergestellt werden, erfüllen.

Aufgabe der vorliegenden Erfindung ist es daher, eine Kunststoffformulierung auf Basis von HDPE bereitzustellen, welche für den Zweistufen-Streckblasprozess geeignet ist. Die HDPE Formulierung soll einen reibungslosen Spritzgiessprozess ohne Schmelzebruch erlauben und andererseits eine ausreichende Reckverfestigung im Streckblasprozess ermöglichen. Weiters soll ein Zweistufen-Streckblasprozess zur Verarbeitung der erfindungsgemässen Kunststoffformulierung geschaffen werden.

Diese Aufgaben werden erfindungsgemäss gelöst durch eine Kunststoffformulierung mit den im Patentanspruch 1 aufgelisteten Merkmalen. Die Erfindung wird auch durch einen Zweistufen-Streckblasprozess zur Herstellung von Kunststoffflaschen gelöst, welcher die im unabhängigen Verfahrensanspruch aufgelisteten Verfahrensschritte aufweisen. Weiterbildungen sowie vorteilhafte und bevorzugte Ausführungsvarianten der Erfindung sind Gegenstand der jeweiligen abhängigen Ansprüche.

Die erfindungsgemässe Kunststoffformulierung zur Herstellung von Kunststoffflaschen in einem Zweistufen-Streckblasprozess basiert wenigstens zu 60% auf HDPE (High Density Polyethylen), welches eine Dichte von 0.941 g/cm³ bis 0.965 g/cm³ und einen ersten Meltindex 190°C/2.16 kg von 0.1 bis 0.9 g/10 min nach ISO 1133 aufweist, wobei das HDPE ein wenigstens bimodales HDPE mit einem zweiten Meltindex 190°C/21.6 kg von 5 g/10 min bis 50 g/10 min umfasst, ebenfalls gemessen nach ISO 1133. Bevorzugt weist die Kunststoffformulierung einen ersten Meltindex 190°C/2.16 kg von etwa 0.3 g/10 min und einen zweiten Meltindex 190°C/21.6 kg von 30 g/10 min sowie eine bimodale Verteilung auf.

Die auf bi- oder multimodalem HDPE beruhende Kunststoffmatrix ist einerseits für den Spritzgiessprozess (oder für ein Fliesspressverfahren) optimiert und andererseits auch sehr gut für den Streckblasprozess geeignet. Das HDPE der gewählten Dichte ist weitgehend problemlos im Spritzgiessprozess verarbeitbar. Dabei sorgt im Spritzgiessprozess insbesondere die Viskosität des HDPE mit geringem Molekulargewicht dafür, dass Schmelze brüche verhindert werden. Das HDPE mit grösserem Molekulargewicht ist im wesentlichen dafür verantwortlich, dass im Streckblasprozess eine ausreichend Reckverfestigung des Kunststoffes erreicht wird. Die mit der Kunststoffformulierung auf Basis von multimodalem HDPE erzielbaren Schwundwerte entsprechen kurz nach dem Spritzguß weitgehend denjenigen von PET. Dies ermöglicht es, im Spritzgiessprozess die Spritzgiessformen aus der PET Verarbeitung zu verwenden. Analoges gilt für den Streckblasprozess, wo ebenfalls die vorhandenen Blasformen für die PET Verarbeitung weiter verwendet werden können. Somit hat die Umstellung des Rohmaterials von PET auf eine Kunststoffformulierung auf Basis von HDPE nicht zwingend Werkzeuginvestitionen zu Folge. Die erfindungsgemässe HDPE Formulierung erlaubt es, Kunststoffflaschen auch im Zweistufen-Streckblasprozess herzustellen und dabei die Vorteile des HDPE, beispielsweise seine hohe Wasserdampfbarriere gegenüber dem PET der daraus hergestellten Kunststoffflaschen auszunutzen. Kunststoffflaschen aus der erfindungsgemässen HDPE Formulierung weisen bei geringerem Flaschengewicht vergleichbare Festigkeitswerte zu PET Flaschen auf. Geringeres Gewicht bedeutet geringeren Rohmaterialeinsatz und damit geringeren Erdölverbrauch und Schonung der Resourcen sowie eine Reduktion des CO₂ Ausstosses. Dies macht den Einsatz der erfindungsgemässen HDPE Kunststoffformulierung sowohl aus ökonomischer als auch aus ökologischer Sicht vorteilhaft. Die im wesentlichen auf Basis von bi- oder multimodalem HDPE hergestellte Kunststoffformulierung weist eine Dichte von 0.941 g/cm³ bis 0.965 g/cm³ auf. Dadurch können die aus der Kunststoffformulierung hergestellten Kunststoffflaschen sehr einfach, beispielsweise in einem Schwimm-Sink Verfahren, über ihre Dichte aus dem PET Strom aussortiert werden.

Aus ökonomischen Gründen kann der Kunststoffformulierung auch bis zu 40% Calciumcarbonat beigemengt sein, um die erforderliche Kunststoffmenge zu reduzieren.

Eine Ausführungsvariante der Erfindung weist wenigstens 90% HDPE auf. Aus ökonomischen Gründen kann diese Ausführungsvariante der Kunststoffformulierung auch bis 10% Calciumcarbonat und/oder Talcum und/oder einer Abmischung von für den Blasprozess geeigneten Polymeren als Füllstoff enthalten. Die Zugabe dieser Art von Füllstoffen verändert die Dichte und die rheologischen Eigenschaften nur in einem sehr begrenzten Umfang, so dass die Verarbeitungsparameter gar nicht oder nur unwesentlich angepasst werden müssen. Auch die erzielbaren Festigkeitswerte der im Zweistufen-Streckblasverfahren hergestellten Kunststoffflaschen wird durch die Zugabe der Füllstoffe in den angegebenen Mengen nur unwesentlich beeinflusst.

Für die Herstellung opaker Kunststoffflaschen können der Kunststoffformulierung 0.1 % bis 4% eines Farbstoffes auf Basis von Titanoxid und/oder Zinksulfid zugesetzt sein.

Das in der erfindungsgemässen Kunststoffformulierung eingesetzte HDPE umfasst ein bi- oder multimodales HDPE mit einem ersten Meltindex 190°C/2.16 kg von 0.1 g/10 min bis 0.9 g/10 min. Weiters gilt als charakterisierend ein zweiter Meltindex 190°C/21.6 kg von 5 g/10 min bis 50 g/10 min, gemessen nach der ISO 1133. Bevorzugt weist die Kunststoffformulierung einen ersten Meltindex 190°C/2.16 kg von ca 0.3 g/10 min und einen zweiten Meltindex 190°C121.6 kg von 30 g/10 min sowie eine bimodale Verteilung auf.

Die auf HDPE beruhende Kunststoffmatrix ist einerseits für den Spritzgiessprozess (oder für ein Fliesspressverfahren) optimiert und andererseits auch sehr gut für den Streckblasprozess geeignet. Dabei sorgt im Spritzgiessprozess insbesondere die Viskosität des HDPE mit geringem Molekulargewicht dafür, dass Schmelzebrüche verhindert werden. Das HDPE mit grösserem Molekulargewicht ist im wesentlichen dafür verantwortlich, dass im Streckblasprozess eine ausreichend Reckverfestigung des Kunststoffes erreicht wird. Die mit der Kunststoffformulierung auf Basis von multimodalem HDPE erzielbaren Schwundwerte entsprechen kurz nach dem Spritzguß weitgehend denjenigen von PET. Dies ermöglicht es, im Spritzgiessprozess die Spritzgiessformen aus der PET Verarbeitung zu verwenden. Analoges gilt für den Streckblasprozess, wo ebenfalls die vorhandenen Blasformen für die PET Verarbeitung weiter verwendet werden können. Somit hat die Umstellung des Rohmaterials von PET auf eine Kunststoffformulierung auf Basis von HDPE nicht zwingend Werkzeuginvestitionen zu Folge.

Bei dem erfindungsgemässen Verfahren zur Herstellung einer Kunststoffflasche in einem Zweistufen-Streckblasprozess wird zunächst in einem Spritzgiessprozess oder in einem Fliesspressverfahren aus einer Kunststoffformulierung ein Preform hergestellt, aus dem in einem zweiten, zeitlich und/oder räumlich getrennten Verfahrensschritt in einem Streckblasprozess eine Kunststoffflasche hergestellt wird. Dabei wird der Preform axial und radial gestreckt bzw. gereckt. Bei dem erfindungsgemässen Verfahren wird eine wenigstens zu 60% auf HDPE einer Dichte von von 0.941 g/cm³ bis 0.965 g/cm³ basierende Kunststoffformulierung bzw. einem Meltindex 190°C/2.16kg von 0.1 bis 0.9g/10min nach ISO 1133 verarbeitet.

Weitere Verfahrensvarianten sehen vor, dass die gemäss den vorstehend geschilderten Weiterbildungen modifizierten Kunststoffformulierungen eingesetzt werden.

Der Einsatz der erfindungsgemässen HDPE Kunststoffformulierungen ermöglicht es, einen "normalen" Zweistufen-Streckblasprozess durchzuführen, in dem der aus dem Rohmaterial hergestellte Preform in ausreichendem Masse axial verstreckt und radial gereckt wird, um der erzeugen Kunststoffflasche die erforderlichen Festigkeitswerte zu verleihen. Um bei der Herstellung des Preforms übermässig hohe Spritzdrücke und lange Verweilzeiten der Kunststoffformulierung im Spritzgiesswerkzeug zu vermeiden, wird der Preform mit einem Anspritzpunkt hergestellt, der einen Durchmesser von 2 mm bis 5 mm aufweist. Die Spritzdrücke im Heisskanal betragen zwischen 200 bar und 2000 bar.

In einer Verfahrensvariante wird der Preform mit einer mittleren Wandstärke von 2.1 mm bis 2.9 mm hergestellt. Bei diesen Wandstärken ist der Preform im Streckblasprozess ausreichend schnell und gleichmässig auf die erforderliche Verarbeitungstemperatur bringbar und die angestrebten hohen Verarbeitungsgeschwindigkeiten können ohne Qualitätseinbusse hinsichtlich Masshaltigkeit oder Festigkeiten erzielt werden.

Eine Variante der Erfindung sieht vor, dass der Preform für die Verarbeitung im Streckblasprozess auf eine Temperatur von 115°C bis 135°C erwärmt wird. Insbesondere die niedrigen Temperaturen sind an sich für HDPE untypisch. Die spezielle HDPE Kunststoffformulierung erlaubt jedoch diese Temperaturbereiche, bei denen das Fliessverhalten des HDPE besonders regelmäßig ist, und demnach auch komplexer geformte Kunststoffbehälter in der geforderten Qualität aufgeblasen werden können. Dabei erweist es sich als zweckmässig, wenn der Preform für die Weiterverarbeitung in der Blasform auf eine Verarbeitungstemperatur von ca. 125°C erwärmt wird. Dies erfolgt beispielsweise durch Infrarotstrahlung.

Damit die hergestellte Kunststoffflasche möglichst hohe Top Load Werte erreicht, sieht eine Verfahrensvariante vor, dass der Preform beim Streckblasprozess in einem Längsstreckverhältnis von 1.8 bis 3.2 axial gestreckt wird und so eine höher Festigkeit erlangt.

Ohne die Streckverfestigung wären wenig verstreckte Bereiche der Flaschen sehr dickwandig und jene Bereiche der Flasche, die sehr stark verstreckt werden, sehr dünnwandig. Die Streckverfestigung des gewählten HDPE's erlaubt es diesen Effekt weitgehend zu reduzieren und Material aus den Dickstellen der Flasche in die Ecken und Kanten zu ziehen. Ovale HDPE Flaschen mit einem Breiten zu Tiefen Verhältnins von 1 zu 3 werden so möglich, was beispielsweise bei Kunststoffflaschen für Kosmetikanwendungen oder für Reinigungsmittel die Herstellung deutlich ovalerer Flaschen ermöglicht.

Die axiale Streckgeschwindigkeit wird zu 0.8 m/s bis 2 m/s gewählt, um einerseits möglichst kurze Zykluszeiten für den Produktionsprozess zu erzielen und andererseits zu gewährleisten, dass die Reckstange den auf Verarbeitungstemperatur erwärmten Preform axial nicht durchstösst.

Damit die hergestellte Kunststoffflasche auch in Umfangsrichtung ausreichende Festigkeiten aufweist, wird in einer Variante der Erfindung angestrebt, den Preform beim Streckblasprozess in einem Durchmesserreckverhältnis von 2.4 bis 3.6 radial zu recken.

Der eigentliche Blasvorgang beim Streckblasprozess erfolgt zweckmässigerweise mit Vorblasdrücken von 1 bar - 5 bar und mit Hauptblasdrücken von 5 bar bis 15 bar. Dies erlaubt schnelle Produktionszyklen bei gleichzeitig schonender Behandlung des Rohmaterials.

Der Preform wird im Streckblasprozess derart aufgeblasen und axial gestreckt, dass eine aufgeblasene Rundflasche eine Schwankung ihrer Wandstärke aufweist, die kleiner ist als ± 0.5 mm. Mit diesen geringen Schwankungsbreiten kann die Wandstärke der Kunststoffflaschen weiter optimiert werden, ohne die zulässigen Mindestwandstärken, die für die geforderten axialen und radialen Festigkeiten der HDPE Flaschen erforderlich sind, zu unterschreiten. Dadurch kann Rohmaterial eingespart werden. Ein reduzierter Rohmaterialeinsatz bedeutet einen geringeren Erdölverbrauch und eine Schonung der Resourcen sowie eine Reduktion des CO₂ Ausstosses. Dies alles macht den Einsatz der erfindungsgemässen HDPE Kunststoffformulierung und des dafür optimierten Zweistufen-Streckblasprozesses sowohl aus ökonomischer als auch aus ökologischer Sicht erstrebenswert.

## Patentansprüche

1. Kunststoffformulierung zur Herstellung von Kunststoffflaschen in einem Zweistufen-Streckblasprozess, bei dem zunächst in einem Spritzgiessprozess oder in einem Fliesspressverfahren aus einer Kunststoffformulierung ein Preform hergestellt wird und in einem zeitlich und/oder räumlich getrennten zweiten Verfahrensschritt aus dem Preform in einem Streckblasprozess eine Kunststoffflasche hergestellt wird, wobei der Preform axial und radial gestreckt bzw. gereckt wird, **dadurch gekennzeichnet, dass** die Kunststoffformulierung wenigstens 60% HDPE (High Density Polyethylen) einer Dichte von 0.941 g/cm³ bis 0.965 g/cm³ und mit einem ersten Meltindex 190°C/2.16 kg von 0.1 bis 0.9 g/10 min nach ISO 1133 aufweist, wobei das HDPE ein wenigstens bimodales HDPE mit einem zweiten Meltindex 190°C/21.6 kg von 5 g/10 min bis 50 g/10 min nach ISO 1133 umfasst.

2. Kunststoffformulierung nach Anspruch 1, **dadurch gekennzeichnet, dass** sie 0% bis 40% Calciumcarbonat als Füllstoff enthält.

3. Kunststoffformulierung nach Anspruch 1, **dadurch gekennzeichnet, dass** der Anteil des HDPE wenigstens 90% beträgt.

4. Kunststoffformulierung nach Anspruch 3, **dadurch gekennzeichnet, dass** sie 0% - 10% Calciumcarbonat und/oder Talcum und/oder einer Abmischung von für den Blasprozess geeigneten Polymeren als Füllstoff enthält.

5. Kunststoffformulierung nach einem der vorangehenden Ansprüche, **dadurch gekennzeichnet, dass** sie 0% bis 4% eines Farbstoffes auf Basis von Titanoxid und/oder Zinksulfid enthält.

6. Kunststoffformulierung nach einem der vorangehenden Ansprüche, **dadurch gekennzeichnet, dass** sie HDPE mit einem ersten Meltindex 190°C/2.16 kg von etwa 0.3 g/10 min und einem zweiten Meltindex 190°C/21.6 kg von 30 g/10 min sowie eine bimodale Verteilung aufweist.

7. Verfahren zur Herstellung einer Kunststoffflasche in einem Zweistufen-Streckblasprozess, bei dem zunächst in einem Spritzgiessprozess oder in einem Fliesspressverfahren aus einer Kunststoffformulierung ein Preform hergestellt wird und in einem zweiten zeitlich und/oder räumlich getrennten Verfahrensschritt aus dem Preform in einem Streckblasprozess eine Kunststoffflasche hergestellt wird, wobei der Preform axial und radial gestreckt bzw. gereckt wird, **dadurch gekennzeichnet, dass** eine auf einem wenigstens bimodalen HDPE basierende Kunststoffformulierung gemäss einem der Ansprüche 1-6 verarbeitet wird.

8. Verfahren nach Anspruch 7, **dadurch gekennzeichnet, dass** der Preform mit einem Anspritzpunkt hergestellt wird, der einen Durchmesser von 2 mm bis 5 mm aufweist, und mit Drücken zwischen 200 bar und 2000 bar im Heisskanal gespritzt wird.

9. Verfahren nach Anspruch 7 oder 8, **dadurch gekennzeichnet, dass** der Preform mit einer mittleren Wandstärke von 2.1 mm bis 2.9 mm hergestellt wird.

10. Verfahren nach einem der Ansprüche 7 - 9, **dadurch gekennzeichnet, dass** der Preform für die Verarbeitung im Streckblasprozess auf eine Temperatur von 115°C bis 135°C erwärmt wird.

11. Verfahren nach einem der Ansprüche 7 - 10, **dadurch gekennzeichnet, dass** der Preform beim Streckblasprozess in einem Längsstreckverhältnis von 1.8 bis 3.2 axial gestreckt wird.

12. Verfahren nach einem der Ansprüche 7 - 11, **dadurch gekennzeichnet, dass** die axiale Streckgeschwindigkeit 0.8 m/s bis 2 m/s beträgt.

13. Verfahren nach einem der Ansprüche 7 -12, **dadurch gekennzeichnet, dass** der Preform beim Streckblasprozess in einem Durchmesserreckverhältnis von 2.4 bis 3.6 radial gereckt wird.

14. Verfahren nach einem der Ansprüche 7 - 13, **dadurch gekennzeichnet, dass** der Preform im Streckblasprozess derart aufgeblasen und axial gestreckt wird, dass eine aufgeblasene Flasche über ihren Umfang - mit Ausnahme von Ecken und Kanten - eine Schwankung ihrer Wandstärke aufweist, die kleiner ist als + 0.5 mm.
